Europäisches Patentamt

(19) European Patent Office

Office européen des brevets

(11) Numéro de publication : **0 340 063 B1**

## (12) FASCICULE DE BREVET EUROPEEN

(45) Date de publication du fascicule du brevet :
12.06.91 Bulletin 91/24

(51) Int. Cl.⁵ : **B60K 15/03, F02M 37/00**

(21) Numéro de dépôt : **89400965.3**

(22) Date de dépôt : **07.04.89**

(54) **Réservoir de carburant pour l'alimentation d'un moteur à combustion interne.**

(30) Priorité : **26.04.88 FR 8805524**

(43) Date de publication de la demande :
**02.11.89 Bulletin 89/44**

(45) Mention de la délivrance du brevet :
**12.06.91 Bulletin 91/24**

(84) Etats contractants désignés :
**DE GB IT**

(56) Documents cités :
**DE-A- 2 458 982
FR-A- 1 219 976
GB-A- 2 174 651
PATENT ABSTRACTS OF JAPAN, vol. 7, no. 31
(M-192)(1176), 8 février 1983**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Blonde, Michel
36, Avenue Joffre
F-25200 Montbeliard (FR)**

(74) Mandataire : **Pinchon, Odile
Peugeot S.A. Propriété Industrielle 18, rue des
Fauvelles
F-92250 La Garenne-Colombes (FR)**

EP 0 340 063 B1

## Description

La présente invention còncerne un réservoir de carburant pour l'alimentation d'un moteur à combustion interne, et s'applique notamment à un véhicule automobile.

Le carburant destiné à l'alimentation d'un moteur à combustion interne est contenu dans un réservoir de carburant constitué d'une enceinte à l'extérieur de laquelle du carburant est aspiré au moyen d'une pompe mécanique ou électrique vers le système à injection ou vers le carburateur. Les injecteurs ou le carburateur ne prélevant environ qu'un tiers de la quantité aspirée dans le réservoir, le surplus de carburant est ramené par une tuyauterie de retour vers le réservoir. Ce retour de carburant présente notamment l'avantage par temps froid de réchauffer le réservoir et ainsi de dissoudre la paraffine qui a pu colmater la crépine placée de façon classique dans le réservoir et dans laquelle plonge le tuyau d'aspiration de carburant.

Ce recyclage présente cependant un inconvénient, car le carburant, qui se détend à la sortie des injecteurs ou du carburateur, retourne vers le réservoir chargé de bulles. Ces bulles subsistent ensuite dans le réservoir où elles risquent d'être aspirées par la pompe, entraînant ainsi des irrégularités de la puissance du moteur alimenté par le carburant.

L'invention a donc pour but un réservoir de carburant pour l'alimentation d'un moteur à combustion interne, comportant une enceinte à l'intérieur de laquelle du carburant bulleux revenant du système d'injection ou du carburateur pénètre verticalement par un tube d'arrivée et à l'extérieur de laquelle du carburant est aspiré verticalement dans un tube de sortie vers le système d'injection ou le carburateur, tel que les bulles présentes dans le carburant revenant du système d'injection ou du carburateur ne soient pas aspirées vers le système d'injection ou le carburateur.

Selon l'invention, l'enceinte est séparée en deux compartiments au moyen d'une cloison verticale s'étendant au moins sur toute la hauteur de l'enceinte, chacun des deux tubes, d'arrivée et de sortie, communiquant avec l'un des deux compartiments, et la cloison comporte une grille dont le maillage peut retenir les bulles incluses dans le carburant issu du tube d'arrivée.

Dans un premier mode de réalisation du réservoir selon l'invention, l'enceinte est constituée par un bac stabilisateur fixé au fond du réservoir et le compartiment avec lequel communique le tuyau de sortie contient une crépine dans laquelle plonge le tuyau de sortie.

Le bac stabilisateur peut être séparé en deux compartiments inégaux au moyen d'une cloison verticale plus haute que les parois de l'enceinte, le compartiment de dimensions plus importantes contenant le crépine et étant muni à sa base d'un trou de remplissage par du carburant contenu dans le réservoir à l'extérieur du bac stabilisateur.

Le bac stabilisateur peut également être séparé en deux compartiments par une cloison circulaire entourant la crépine, le compartiment contenant la crépine étant fermé à sa partie supérieure par un couvercle percé d'une part dans sa partie centrale pour le passage du tuyau de sortie et d'autre part par des orifices de mise à l'air libre du volume compris entre la crépine et la cloison circulaire.

Dans un autre mode de réalisation, préféré, du réservoir selon l'invention, l'enceinte est constituée par une crépine posée au fond du réservoir ou d'un bac stabilisateur contenu dans le réservoir et est séparée en deux compartiments par une cloison verticale s'étendant du fond jusqu'au couvercle de la crépine, le compartiment qui communique avec le tuyau d'arrivée étant muni d'évents pour l'évacuation du gaz contenu dans les bulles.

Dans ces divers modes de réalisation, la cloison peut être entièrement grillagée ou bien comporter une partie pleine jusqu'à une certaine hauteur à partir du fond du réservoir, la partie restante étant grillagée, ou encore être munie, sensiblement à mi-hauteur, d'une fenêtre grillagée.

D'autres caractéristiques de l'invention apparaîtront à la lecture de la description qui va suivre de quatre modes de réalisation particuliers de l'invention, donnés uniquement à titre d'exemple et représentés par les dessins annexés.

La figure 1 représente schématiquement le circuit bouclé d'alimentation en carburant d'un moteur à combustion interne, comportant un réservoir selon le mode préféré de réalisation de l'invention.

La figure 2 représente, en coupe et en élévation, la crépine du réservoir de la figure 1.

La figure 3 est une vue partielle de dessus de la crépine de la figure 2.

La figure 4 représente, dans une vue analogue à la figure 2, un autre mode de réalisation d'une crépine de réservoir selon l'invention.

Les figures 5 et 6 représentent, en coupe et en élévation, deux modes de réalisation de l'invention dans lesquels l'enceinte est constituée par un bac stabilisateur.

Sur ces figures, les éléments correspondants portent les mêmes repères.

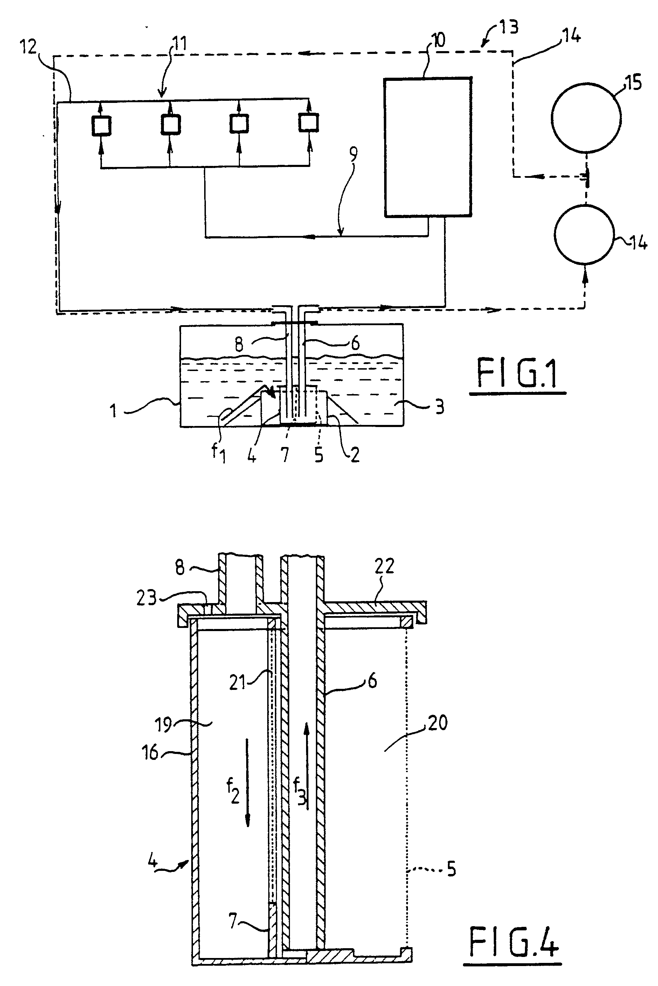

On se reportera tout d'abord à la figure 1.

Cette figure montre schématiquement deux modes de réalisation possibles d'un circuit bouclé d'alimentation en carburant d'un moteur à combustion interne.

Les deux circuits comportent en commun un réservoir de carburant 1 dans le fond duquel est fixé un bac stabilisateur 2 dont le rôle, est de façon connue, de retenir une quantité de carburant suffisante même quand le niveau de carburant dans le réservoir 1 est bas et que le véhicule est incliné, axialement ou transversalement. Le carburant 3 contenu dans le réservoir 1 proprement dit pénètre dans le bac stabilisateur 2 par vagues, à chaque changement de direction du véhicule comme l'indique la flèche f1 ; il est également alimenté par un trou de communication entre le réservoir et le bac placé à la partie inférieure du bac mais non visible sur la figure 1.

Au fond du bac stabilisateur 2 est fixée une crépine 4 munie d'une partie grillagée 5 et jouant ainsi un rôle de filtre en empêchant les impuretés qui se trouvent éventuellement dans le carburant contenu dans le réservoir 1 ou le bac stabilisateur 2 d'être aspirées dans un tube 6 de sortie du réservoir 1. La crépine 4 est séparée en deux compartiments au moyen d'une cloison grillagée 7, le tube 6 plongeant dans l'un des compartiments et un deuxième tube 8 d'arrivée de carburant plongeant dans l'autre compartiment.

Dans le premier circuit, représenté en traits pleins et repéré par 9, le carburant (Diesel ou essence) est aspiré dans le tuyau 6 au moyen d'une pompe d'injection 10 et envoyé sous pression dans des injecteurs 11. Ceux-ci ne prélèvent qu'1/3 environ du carburant qui leur est envoyé par la pompe 10, et le surplus de carburant revient vers le réservoir 1 par une tuyauterie 12. Le carburant, qui était sous pression dans les injecteurs 11, se détend dans la tuyauterie 12 et cette détente provoque la formation de bulles abondantes constituant une mousse.

Dans le deuxième circuit, représenté en traits mixtes et repéré par 13, le carburant, qui est ici de l'essence, est aspiré dans le tuyau 6 au moyen d'une pompe 14, électrique ou mécanique et envoyé dans le carburateur 15. Comme dans le circuit 1, un surplus de carburant revient vers le réservoir 1 par une tuyauterie 14 dans laquelle il se détend. Cette détente provoque également la formation de mousse.

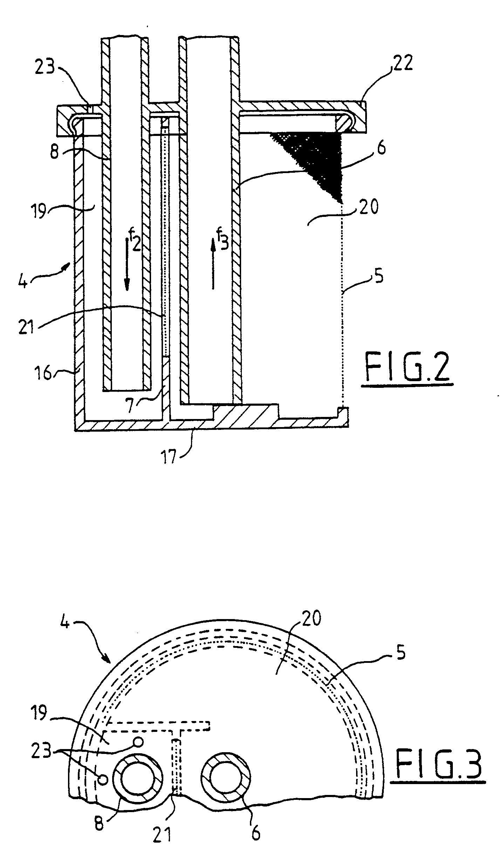

On se reportera maintenant aux figures 2 et 3 qui montrent de façon plus détaillée la crépine 4 de la figure 1.

Celle-ci est constituée d'une structure rigide cylindrique 16 munie d'un fond 17 posé au fond du bac stabilisateur 2 et d'une ouverture grillagée 5 sur environ les 3/4 de sa surface. Le volume intérieur de la crépine 4 est divisé en deux compartiments 19 et 20 au moyen d'une cloison 7. Cette cloison est pleine jusqu'à une certaine hauteur (dans ce cas précis environ 1/5) à partir du fond 7 du réservoir, le reste étant constitué d'une fenêtre grillagée 21.

La crépine 4 est fermée à sa partie supérieure par un couvercle 22 muni des deux tubes 6 et 8 qui plongent respectivement dans les compartiments 20 et 19, presque jusqu'au fond de ceux-ci, l'extrémité inférieure du tube 8 étant située au niveau de la partie pleine de la cloison 7, sensiblement à mi-hauteur de celle-ci. Le couvercle 22 est muni d'orifices 23 de mise à l'air libre du volume compris dans le compartiment 19.

Le carburant chargé de bulles qui arrive par le tube 8, comme l'indique la flèche f2, se tranquillise dans le fond du compartiment 19 et les bulles qu'il contient remontent sans pouvoir passer à travers la fenêtre grillagée 21 contrairement au carburant liquide qui s'écoule dans le compartiment 20 avant d'être aspiré, exempt de bulles dans le tuyau de sortie 6, comme l'indique la flèche f3. Le gaz contenu dans les bulles s'échappe par les évents 23 quand celles-ci ont éclaté.

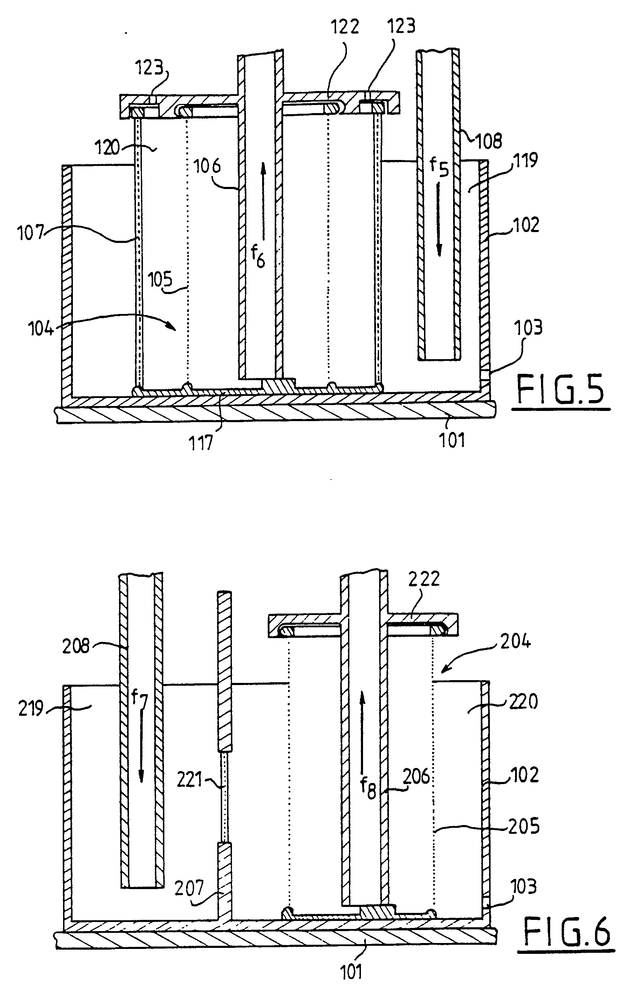

Le mode de réalisation de la crépine représenté à la figure 4 diffère de celui des figures 2 et 3 uniquement par le fait que le tube 8 ne plonge pas dans le compartiment 19 mais s'arrête à l'entrée de ce compartiment, au niveau du couvercle 22. Le volume de tranquillisation du carburant chargé de bulles est ainsi augmenté.

Sur les figures 5 et 6, l'enceinte dans laquelle plongent les tubes de sortie et d'arrivée du carburant est constituée par le bac stabilisateur que l'on a ici repéré par 102. Ce bac est fixé au fond 101 du réservoir de carburant, par des moyens non représentés. Le carburant contenu dans le réservoir pénètre dans le bac stabilisateur 102 par un trou de communication 103 entre le réservoir et le bac, placé à la partie inférieure du bac ainsi que par les vagues provoquées par les changements de direction du véhicule.

Dans le mode de réalisation de la figure 5, le volume intérieur du bac 102 est divisé en deux compartiments 119 et 120 au moyen d'une cloison cylindrique 107, entièrement grillagée. Le compartiment 120 situé à l'intérieur du cylindre 107 contient une crépine 104 munie d'une partie grillagée 105 et dans laquelle plonge un tube 106 de sortie de carburant. Ce compartiment 120 est fermé à sa partie supérieure par un couvercle 122 qui sert également de couvercle à la crépine 104 et qui est percé d'une part dans sa partie centrale pour le passage du tube 106 et d'autre part par des orifices 123 de mise à l'air libre du volume compris entre la crépine 104 et la cloison cylindrique 107. Le compartiment 120 est fermé à sa partie inférieure par un fond 117 posé au fond du bac stabilisateur et qui constitue également le fond de la crépine 104.

Un tube 108 d'arrivée de carburant plonge dans le compartiment 119 situé à l'extérieur de la cloison cylindrique 107.

Le carburant chargé de bulles qui arrive dans le compartiment 119 par le tube d'arrivé 108, comme l'indique la flèche f5, s'écoule dans le compartiment 120, exempt de bulles, celles-ci ne traversant pas la cloison grillagée 107. Avant d'être aspiré dans le tube de sortie 106, comme l'indique la flèche f6, le carburant est encore filtré lors de son passage à travers la partie grillagée 105 de la crépine 104. Ainsi, dans le cas où le carburant s'écoulant du compartiment 119 dans le compartiment 120 est encore très légèrement mousseux, les petites bulles constituant cette mousse résiduelle peuvent être éliminées. Le gaz qui était contenu dans ces bulles s'échappe alors par les orifices 123 de mise à l'air libre.

Dans le mode de réalisation de la figure 6, le volume intérieur du bac 102 est divisé en deux compartiments inégaux 219 et 220 au moyen d'une cloison verticale 207, plus haute que les parois du bac 102. Le compartiment 220, de dimensions plus importantes, comporte le trou 103 de communication avec le bac 102 et contient une crépine 204. Celle-ci est fermée par un couvercle 222 percé dans sa partie centrale pour le passage d'un tube de sortie 206. Le compartiment 219 reçoit l'extrémité plongeante d'un tube 208 d'arrivée de carburant. La cloison verticale 207 est munie, sensiblement à mi-hauteur, d'une fenêtre grillagée 221 ; la partie inférieure de la cloison 207 est donc pleine et l'extrémité inférieure du tube d'arrivée 208 arrive sensiblement à mi-hauteur de cette partie pleine.

Le carburant chargé de bulles qui arrive dans le compartiment 219 par le tube 208 comme l'indique la flèche f7 s'écoule dans le compartiment 220 exempt de bulles, celles-ci ne traversant pas le fenêtre grillagée 221. Comme dans le cas de la figure 5, le carburant est à nouveau filtré par les parois 205 de la crépine 204 avant d'être aspiré dans le tube de sortie comme l'indique la flèche f8.

Comme la cloison 207 est plus haute que les parois du bac stabilisateur 102, et est pleine à sa partie supérieure, celle-ci évite que du carburant ne passe intempestivement du compartiment 219 au compartiment 220 par effet de vagues lors d'un changement de direction.

Le fait que la cloison 207 soit pleine à sa partie inférieure permet au carburant chargé de bulles de se tranquilliser dans le fond du compartiment 219.

Le réservoir de carburant que l'on vient de décrire permet donc d'éliminer complètement les bulles du carburant de retour, avant sa sortie du réservoir. La qualité du jet de carburant pompé dans le tube de sortie permet ainsi un bon fonctionnement de la pompe et du moteur alimenté par le carburant.

En outre, un tel réservoir est simple et économique à réaliser. On pourra utiliser par exemple pour réaliser le grillage un matériau en polyamide. La grosseur des mailles constituant le grillage dépend bien sûr du carburant utilisé, essence ou Diesel. A titre d'exemple, on pourra utiliser des mailles de 150 microns pour le Diesel et de 60 microns pour l'essence.

Bien entendu, l'invention n'est pas limitée aux modes de réalisation particuliers qui ont été décrits.

Ainsi on peut concevoir des variantes de ces divers modes, en modifiant la cloison qui divise l'enceinte en deux compartiments, celle-ci pouvant être entièrement grillagée ou seulement partiellement grillagée.

En outre, le réservoir peut comporter plusieurs cloisons grillagées disposées parallèlement les unes aux autres. Dans le cas où ces cloisons sont munies de fenêtres, celles-ci peuvent ne pas être en vis-à-vis, mais être décalées les unes par rapport aux autres.

On peut également remplacer par exemple la crépine 204 de la figure 6 par l'ensemble cloison cylindrique 107-crépine 104-couvercle 122 de la figure 5.

La pompe d'aspiration du carburant peut, de façon connue, être placée dans la crépine. Dans ce cas, le tube de sortie, tel que 6, 106 ou 206 ne plonge pas dans la crépine mais il est directement relié à la pompe qui refoule le carburant à l'intérieur de celui-ci.

## Revendications

1. Réservoir de carburant pour l'alimentation d'un moteur à combustion interne, comportant une enceinte à l'intérieur de laquelle du carburant bulleux revenant du système d'injection ou du carburateur pénètre verticalement par un tube d'arrivée et à l'extérieur de laquelle du carburant est aspiré verticalement dans un tube de sortie vers le système d'injection ou le carburateur, caractérisé par le fait que l'enceinte (4, 102) est séparée en deux compartiments (19, 20 ; 119, 120 ; 219, 220) au moyen d'une cloison verticale (7, 107, 207) s'étendant au moins sur toute la hauteur de l'enceinte (4, 102), que chacun des deux tubes, d'arrivée (8, 108, 208) et de sortie (6, 106, 206) communique avec l'un des deux compartiments (19, 119, 219 ; 20, 120, 220) et que la cloison (7, 107, 207) comporte une grille (21, 107, 221) dont le maillage peut retenir les bulles incluses dans le carburant issu du tube d'arrivée (8, 108, 208).

2. Réservoir de carburant selon la revendication 1, caractérisé par le fait que l'enceinte est constituée par un bac stabilisateur (102) fixé au fond (101) du réservoir (1) et que le compartiment (120, 220) avec lequel communique le tuyau de sortie (106, 206) contient une crépine (104, 204) dans lequel plonge le tuyau de sortie (106, 206).

3. Réservoir de carburant selon la revendication 2, caractérisé par le fait que le bac stabilisateur (102) est séparé en deux compartiments inégaux (219, 220) au moyen d'une cloison verticale (207) plus haute que les parois du bac (102) et que le compartiment (220) de dimensions plus importantes contient la crépine (204) et est muni à sa base d'un trou (103) de remplissage par du carburant contenu dans le réservoir (1) à l'extérieur du bac stablisateur (102).

4. Réservoir de carburant selon la revendication 2, caractérisé par le fait que le bac stablisateur (102) est séparé en deux compartiments (119, 120) par une cloison cylindrique (107) entourant la crépine (104), que le compartiment (120) contenant la crépine (104) est fermé à sa partie supérieure par un couvercle (122) percé d'une part dans sa partie centrale pour le passage du tube (106) de sortie et d'autre part par des orifices (123) de mise à l'air libre du volume compris entre la crépine (104) et la cloison cylindrique (107).

5. Réservoir de carburant selon la revendication 1, caractérisé par le fait que l'enceinte est constituée par une crépine (4) fixée au fond du réservoir (1) ou d'un bac stabilisateur (2) contenu dans le réservoir (1) et est séparée en deux compartiments (19, 20) par une cloison verticale (7) s'étendant du fond (17) jusqu'au couvercle (22) de la crépine (4), le compartiment (19) qui communique avec le tuyau d'arrivée (8) étant muni d'évents (23) pour l'évacuation du gaz contenu dans les bulles.

6. Réservoir de carburant selon l'une des revendications 1 à 5, caractérisé par le fait que la cloison (107) est entièrement grillagée.

7. Réservoir de carburant selon l'une des revendications 1 à 5, caractérisé par le fait que la cloison (207) est munie, sensiblement à mi-hauteur, d'une fenêtre grillagée (221).

8. Réservoir de carburant selon l'une des revendications 1 à 5, caractérisé par le fait que la cloison (7) comporte une partie pleine jusqu'à une certaine hauteur à partir du fond (17) de l'enceinte (4), la partie restante étant grillagée.

9. Réservoir de carburant selon la revendication 8, caractérisé par le fait que l'extrémité inférieure du tube d'arrivée (8) est située au niveau de ladite partie pleine, de préférence sensiblement à mi-hauteur de celle-ci.

10. Réservoir de carburant selon l'une des revendications précédentes, caractérisé par le fait que la cloison comporte plusieurs grilles parallèles.

**Ansprüche**

1. Kraftstofftank zur Versorgung eines Brennkraftmotors mit einem Behälter, in dessen Innenraum vom Einspritzsystem oder vom Vergaser rückfließender, mit Blasen versehener Kraftstoff durch ein Eingangsrohr senkrecht eintritt und von dessen Außenraum Kraftstoff in einem Ausgangsrohr zum Einspritzsystem oder zum Vergaser hin angesaugt wird, **dadurch gekennzeichnet**, daß der Behälter (4, 102) in zwei Kammern (19, 20 ; 119, 120 ; 219, 220) mittels einer senkrechten Zwischenwand (7, 107, 207) geteilt ist, die sich mindestens bis zur vollen Höhe des Behälters (4, 102) erstreckt, daß das Eingangs- (8, 108, 208) bzw. das Ausgangsrohr (6, 106, 206) jeweils mit einer der beiden Kammern (19, 119, 219 ; 20, 120, 220) in Verbindung steht und daß die Zwischenwand (7, 107, 207) ein Gitter (21, 107, 221) aufweist, dessen Netzwerk die aus dem Eingangsrohr (8, 108, 208) gekommenen, vom Kraftstoff eingeschlossenen Blasen zurückhalten kann.

2. Kraftstofftank nach Anspruch 1, **dadurch gekennzeichnet**, daß der Behälter von einem auf dem Boden (101) des Tanks (1) befestigten Stabilisator-Kasten (102) gebildet wird und daß die Kammer (120, 220), mit der das Ausgangsrohr (106, 206) in Verbindung steht, ein Schutzfilter (104, 204) aufweist, in das das Ausgangsrohr (106, 206) eintaucht.

3. Kraftstofftank nach Anspruch 2, **dadurch gekennzeichnet**, daß der Stabilisator-Kasten (102) in zwei ungleiche Kammern (219, 220) mittels einer senkrechten Zwischenwand (207) geteilt ist, die höher als die Wände des Kastens (102) ist, und daß die Kammer (220) mit den größeren Abmessungen das Schutzfilter (204) enthält und an seiner Basis mit einer Öffnung (103) zum Füllen mit Kraftstoff versehen ist, der sich im Tank (1) außerhalb des Stabilisator-kastens (102) befindet.

4. kraftstofftank nach Anspruch 2, **dadurch gekennzeichnet**, daß der Stabilisator-Kasten (102) in zwei Kammern (119, 120) durch eine zylindrische, das Schutzfilter (104) umgebende Zwischenwand (107) geteilt ist, daß die Kammer (120) mit dem Schutzfilter (104) an ihrem oberen Abschnitt durch einen Deckel (122) abgeschlossen ist, der einerseits in seinem zentralen Abschnitt vom Durchgang des Ausgangsrohres (106) und andrerseits von Entlüftungsöffnungen (123) des Raumes zwischen dem Schutzfilter (104) und der zylindrischen Zwischenwand (107) durchbohrt ist.

5. Kraftstofftank nach Anspruch 1, **dadurch gekennzeichnet**, daß der Behälter von einem am Boden des Tanks (1) oder eines im Tank (1) enthaltenen Stabilisator-Kastens (2) befestigten Schutzfilter (4) gebildet und in zwei Kammern (19, 20) durch eine senkrechte Zwischenwand (7) geteilt wird, die sich vom Boden (17) bis zum Deckel (22) des Schutzfilters (4) erstreckt, wobei die Kammer (19), die mit dem Eingangsrohr (8) in Verbindung steht, mit Entlüftungsöffnungen (23) für den Austritt des in den Blasen enthaltenen Gases versehen ist.

6. Kraftstofftank nach einem der Ansprüche 1 bis 5, **dadurch gekennzeichnet**, daß die Zwischenwand (107) vollständig mit einem Gitter versehen ist.

7. Kraftstofftank nach einem der Ansprüche 1 bis 5, **dadurch gekennzeichnet**, daß die Zwischenwand (207) genau in mittlerer Höhe mit einem Fenstergitter (221) versehen ist.

8. Kraftstofftank nach einem der Ansprüche 1 bis 5, **dadurch gekennzeichnet**, daß die Zwischenwand (7) vom Boden (17) des Behälters (4) an bis zu einer bestimmten Höhe einen massiven Abschnitt aufweist, während der restliche Abschnitt mit einem Gitter versehen ist.

9. Kraftstofftank nach Anspruch 8, **dadurch gekennzeichnet**, daß das untere Ende des Eingangsrohres (8) auf dem Niveau dieses massiven Abschnitts, vorzugsweise genau auf dessen halber Höhe, liegt.

10. Kraftstofftank nach einem der vorhergehenden Ansprüche, **dadurch gekennzeichnet**, daß die Zwischenwand mehrere parallele Gitter aufweist.

## Claims

1. Fuel tank for the supply of an internal combustion engine, comprising an enclosure inside which fuel containing bubbles and returning from the injection system or from the carburettor enters vertically via an inlet tube and outside which fuel is drawn vertically into an outlet tube towards the injection system or the carburettor, characterised in that the enclosure (4, 102) is divided into two compartments (19, 20 ; 119, 120 ; 219, 220) by means of a vertical partition (7, 107, 207) extending at least over the full height of the enclosure (4, 102), that each of the two tubes, inlet (8, 108, 208) and outlet (6, 106, 206), communicates with one of the two compartments (19, 119, 219 ; 20, 120, 220) and that the partition (7, 107, 207) comprises a lattice (21, 107, 221) of which the meshwork can retain the bubbles trapped in the fuel coming from the inlet tube (8, 108, 208).

2. Fuel tank according to claim 1, characterised in that the enclosure consists of a stabiliser receptacle (102) fixed to the bottom (101) of the tank (1) and that the compartment (120, 220) with which the outlet pipe (106, 206) communicates contains a strainer (104, 204) in which the outlet pipe (106, 206) is immersed.

3. Fuel tank according to claim 2, characterised in that the stabiliser receptacle (102) is divided into two unequal compartments (219, 220) by means of a vertical partition (207) higher than the walls of the receptacle (102) and that the compartment (220) of larger dimensions contains the strainer (204) and is provided in its base with a hole (103) for filling with fuel contained in the tank (1) outside the stabiliser (102).

4. Fuel tank according to claim 2, characterised in that the stabiliser receptacle (102) is divided into two compartments (119, 120) by a cylindrical partition (107) surrounding the strainer (104), that the compartment (120) containing the strainer (104) is closed in its upper region by a cover (122) with on the one hand a hole in its central portion for passage of the outlet tube (106) and with on the other hand orifices (123) for communication with the atmosphere of the volume between the strainer (104) and the cylindrical partition (107).

5. Fuel tank according to claim 1, characterised in that the enclosure consists of a strainer (4) fixed to the bottom of the tank (1) or a stabiliser receptacle (2) contained in the tank (1) and is divided into two compartments (19, 20) by a vertical partition (7) extending from the bottom (17) to the cover (22) of the strainer (4), the compartment (19) which communicates with the inlet pipe (8) being provided with vents (23) for evacuation of the gas contained in the bubbles.

6. Fuel tank according to any of claims 1 to 5, characterised in that the partition (107) is completely latticed.

7. Fuel tank according to any of claims 1 to 5, characterised in that the partition (207) is provided, approximately halfway up, with a latticed window (221).

8. Fuel tank according to any of claims 1 to 5, characterised in that the partition (7) comprises a solid portion up to a certain height from the bottom (17) of the enclosure (4), the remaining portion being latticed.

9. Fuel tank according to claim 8, characterised in that the lower end of the inlet tube (8) is situated at the level of said solid portion, preferably approximately halfway up same.

10. Fuel tank according to any of the preceding claims, characterised in that the partition comprises several parallel lattices.

FIG.1

FIG.4

FIG.2

FIG.3

FIG.5

FIG.6